# EUROPEAN PATENT SPECIFICATION

(11) **EP 1 608 880 B1**
(45) Date of publication and mention of the grant of the patent: **12.09.2007**
(21) Application number: 04723239.2
(22) Date of filing: 25.03.2004
(51) Int. Cl.: F16C 11/06, F16C 27/06

(54) **A SPHERICAL BEARING ARRANGEMENT**
SPHÄRISCHE LAGERANORDNUNG
DISPOSITIF DE PALIER A ROTULE

(30) Priority: 31.03.2003 GB 0307424
(43) Date of publication of application: 28.12.2005
(73) Proprietor: Minebea Co. Ltd., Kitasaku-gun, Nagano 389-0293 (JP)
(72) Inventor: SMITH, Paul Raymond, Lincoln LN6 3RA (GB); CLARKE, Allen Christopher, Lincoln LN6 3RA (GB)
(74) Representative: Hoarton, Lloyd Douglas Charles
(86) International application number: PCT/GB2004/001298
(87) International publication number: WO 2004/088156

(56) References cited:
- EP-A- 0 781 932
- GB-A- 1 360 515
- US-A- 3 125 364
- US-A- 5 033 722
- US-A- 5 364 191

## Description

This invention relates to a bearing arrangement and more particularly to high torque applications for spherical bearings.

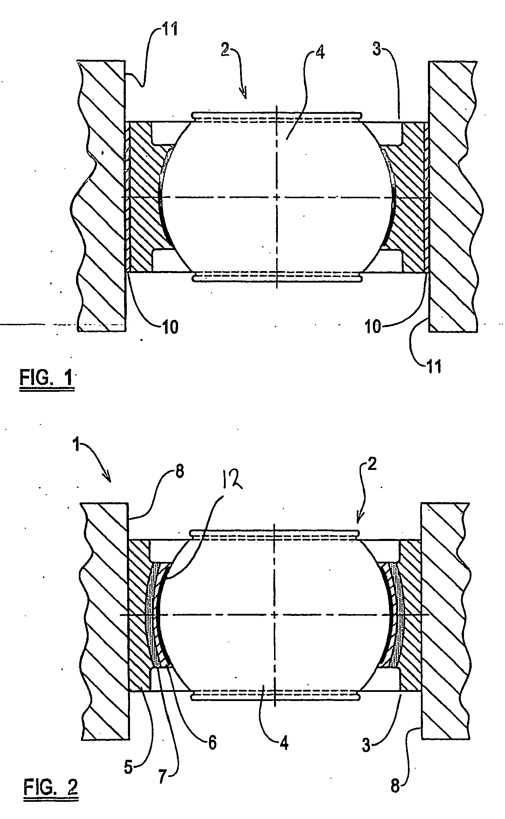

Spherical bearings are often used in high torque applications where a predetermined torque must be retained when a bearing is installed into a hole to provide a bearing function between two parts. Whilst it is preferred practice to have a degree of interference between the spherical bearing and the hole into which it is installed, the use of an interference fit hole causes the torque of the bearing to be increased considerably from its pre-installation torque, simply because the interference fit deforms the bearing housing effectively clamping the bearing housing down on to the ball. This is unfortunate because the more interference provided between the bearing and the hole, the more securely the bearing will be installed and held within the hole. Unfortunately, if the torque of the bearing arrangement in the interference hole is outside the tolerances specified for the application, the torque having been increased when inserted into the interference fit hole, then this arrangement can simply not be used. Accordingly, the conventional practice is to use a clearance fit hole into which the spherical bearing is inserted. The bearing housing is secured to the clearance fit hole by an adhesive. Figure 1 of the accompanying drawings shows a bearing arrangement in which a spherical bearing is installed in a clearance fit hole and secured therein by a layer of adhesive between the clearance fit hole and the outer surface of the bearing housing. This method ensures that the torque does not appreciably change during assembly so that the measured torque of the bearing, prior to installation, remains substantially unaltered after installation.

However, it should be noted that the bearing is only as secure in the clearance fit hole as the strength of the adhesive allows. Typically, the adhesives used in these applications are brittle and their strength can reduce over time, leading to the possibility of movement between the bearing housing and the clearance fit hole as the adhesive layer degenerates. Typically, the clearance fit hole is located in an expensive or precision machined part of an overall apparatus and damage will be caused to the clearance fit hole and possibly other areas of the product as a result of movement of the bearing housing within the clearance fit hole. Thus, when the bearing needs replacing because it too may also be damaged because of its movement between the bearing housing and the clearance fit hole, the clearance fit hole is now oversize so the clearance fit hole needs to be re-bored - if that is possible - or the apparatus scrapped. In the case that the clearance fit hole can be re-bored, it would then be necessary to supply an oversize bearing housing - a one-off and expensive process.

Another conventional spherical bearing arrangement according to the characterising portion of claim 4 is known from US-A-3125364.

It is an object of the present invention to provide a bearing arrangement which does not require the use of a clearance fit hole to maintain the torque of a bearing in an acceptable range after installation.

Accordingly, one aspect of the present invention provides a method of manufacturing a bearing arrangement, comprising: providing a spherical bearing to be securely held in an interference fit hole, the spherical bearing having a bearing housing and a ball located therein, the bearing housing having a rigid outer race and a rigid inner race and an annular elastomeric portion sandwiched between the races, wherein the spherical bearing has a torque between the ball and housing, the torque being within a predetermined range; and installing the spherical bearing in an interference fit hole, the torque remaining within the predetermined range when held in the interference fit hole.

Preferably, the method further comprises: heating the material defining the interference fit hole; cooling the spherical bearing; inserting the spherical bearing into the interference fit hole; and allowing the temperature of the two parts to return to ambient.

Conveniently, the predetermined torque range is 5 to 100Nm.

Another aspect of the present invention provides a bearing arrangement according to claim 4.

Preferably, the spherical bearing is a high torque bearing having an oscillatory torque and the predetermined range is 5 to 100Nm.

Conveniently, the spherical bearing is a high torque bearing having an oscillatory torque and the predetermined range is 8 to 50 Nm.

Advantageously, the elastomeric portion is bonded to the inner and outer races.

Preferably, a liner is provided on the inner race in contact with the ball.

Conveniently, the liner is a self-lubricating liner.

Advantageously, the inner race and ball are both manufactured from metal and the inner race is in direct contact with the ball.

In order that the present invention may be more readily understood, embodiments thereof will now be described, by way of example, with reference to the accompanying drawings, in which:
Figure 1 is a schematic cross-section of a bearing arrangement not in accordance with the present invention installed in a clearance fit hole; and
Figure 2 is a bearing arrangement embodying the present invention installed in an interference fit hole.

Referring now to Figure 2 of the drawings, a bearing arrangement 1 embodying the present invention is shown and comprises a spherical bearing 2 having a bearing housing 3 and a ball 4 located therein, the bearing housing 2 having a rigid steel outer race 5 and a rigid steel inner race 6 between which is sandwiched an annular elastomeric portion7, in this example, a rubber sleeve bonded to both races 5,6. The outer race 5 of the bearing housing is securely held in an interference fit hole 8 (being an interference fit hole because the internal diameter of the hole 8 is less than the outer diameter of the outer race 5). It will be noted that there is no gap between the outer surface of the outer race 5 of the bearing housing 3 and the interference fit hole 8. This is in contrast to the conventional arrangement shown in Figure 1 in which a layer of adhesive 10 bonds the bearing housing to the clearance fit hole 11 - like numerals being used to denote like parts.

Preferably, a self-lubricating liner 12 is provided on the inner surface of the inner race 6 in contact with the ball 4. Alternatively, the inner race 6 and ball 4 may be in direct contact with one another.

If a conventional bearing such as that shown in Figure 1 were installed in an interference fit hole 8, then an increase in the torque between the ball 4 and the housing 3 would be observed. Increases in torque for low torque applications are not of great concern but for high torque applications where it is a requirement that torque be maintained with a predetermined range but at a high level, the use of an interference fit hole 8 dramatically increases the torque usually outside the acceptable range for that high torque application. This is because there is an almost exponential relationship between torque and the amount of interference at high torque (5 to 100Nm) applications. In some high torque applications (8 to 50Na), it is critical to maintain the high torque within a pre-determined range.

The spherical bearing 2 is installed in the interference fit hole 8 by heating the material defining the hole 8, typically a steel block to, for example, 200°C and by cooling the spherical bearing 2 by immersion in liquid nitrogen, typically -196°C, inserting the spherical bearing 2 into the interference fit hole 8 and allowing the temperatures of the two parts to return to ambient. Tests were undertaken to ascertain whether there had been an increase in oscillatory torque after installation but for torques ranging from 1Nm to 32Nm, there was no change whatsoever in the measured oscillatory torque after installation compared to that before installation. It seems that the use of an annular elastomeric portion 7 sandwiched between the two races 5,6 of the bearing housing 3 serves to absorb the interference which is not, therefore, transmitted to the interface between the ball 4 and the bearing housing 3.

An additional advantage of the bearing arrangement 1 using an interference fit hole for installation is that the bearing 2 is very securely held in the interference fit hole 8 and requires a high axial load to remove it from the hole.

Interference fits in the range of 0.033mm to 0.198mm were used for bearings 2 having an outer diameter (i.e. the outer diameter of the outer race 5 of the bearing housing 3) of 66.736mm to 66.782mm. No increase in oscillatory torque values was noted after installation with these interference fits.

Not only does the interference fit installation of the spherical bearing 2 maintain torque within predetermined ranges in high torque applications but also the technique is far simpler than the adhesive method of assembly using a clearance fit hole which requires stringent cleanliness. Further, there is the advantage that of the risk of damage being caused to the installation hole by relative movement with the spherical bearing due to a breakdown of a securing adhesive between bearing 2 and clearance fit hole 11 is totally eliminated by the present invention.

In the present specification "comprises" means "includes or consists of" and "comprising" means "including or consisting of".

## Claims

1. A method of manufacturing a bearing arrangement (1), comprising: providing a spherical bearing (2) to be securely held in an interference fit hole, the spherical bearing (2) having a bearing housing (3) and a ball (4) located therein, the bearing housing (3) having a rigid outer race (5) and a rigid inner race (6) and an annular elastomeric portion (7) sandwiched between the races (5, 6), wherein the spherical bearing (2) has a torque between the ball (4) and housing (3), the torque being within a predetermined range; and
installing the spherical bearing (2) in an interference fit hole, the torque remaining within the predetermined range when held in the interference fit hole.

2. A method according to Claim 1, comprising: heating the material defining the interference fit hole; cooling the spherical bearing (2); inserting the spherical bearing (2) into the interference fit hole; and allowing the temperature of the two parts to return to ambient.

3. A method according to any preceding claim, wherein the predetermined torque range is 5 to 100Nm.

4. A bearing arrangement (1) comprising a spherical bearing (2) having a bearing housing (3) and a ball (4) located therein, the bearing housing (3) having a rigid outer race (5) and an inner race (6), wherein the outer race (5) of the bearing housing (3) is securely held in an interference fit hole and the spherical bearing (2) has a torque between the ball (4) and housing (3), and wherein an annular elastomeric portion (7) is sandwiched between the races (5, 6), **characterised in that** the inner race (6) is rigid and the torque is within a predetermined range prior to the bearing (2) being installed in the interference fit hole, and the torque remains within the predetermined range when the housing (3) is held in the interference fit hole.

5. A bearing arrangement (1) according to Claim 4, wherein the spherical bearing (2) is a high torque bearing having an oscillatory torque and the predetermined range is 5 to 100Nm.

6. A bearing arrangement (1) according to Claim 5, wherein the spherical bearing (2) is a high torque bearing having an oscillatory torque and the predetermined range is 8 to 50 Nm.

7. A bearing arrangement (1) according to any one of claims 4 to 6, wherein the elastomeric portion (7) is bonded to the inner (6) and outer (5) races.

8. A bearing arrangement (1) according to any one of claims 4 to 7, wherein a liner (12) is provided on the inner race (6) in contact with the ball (4).

9. A bearing arrangement (1) according to Claim 8, wherein the liner (12) is a self-lubricating liner.

10. A bearing arrangement (1) according to any one of Claims 4 to 9, wherein the inner race (6) and ball (4) are both manufactured from metal and the inner race (6) is in direct contact with the ball (4).

## Patentansprüche

1. Verfahren zur Herstellung einer Lageranordnung (1), das Folgendes umfasst:
Bereitstellen eines Kugellagers (2), das fest in einem Presssitzloch gehalten wird, wobei das Kugellager (2) ein Lagergehäuse (3) und eine darin befindliche Kugel (4) aufweist, das Lagergehäuse (3) einen starren äußeren Laufring (5) und einen starren inneren Laufring (6) sowie einen ringförmigen elastomeren Abschnitt (7) aufweist, der zwischen den Laufringen (5, 6) angeordnet ist, wobei das Kugellager (2) ein Drehmoment zwischen der Kugel (4) und dem Gehäuse (3) aufweist und sich das Drehmoment innerhalb eines vorbestimmten Bereichs befindet; und
Installieren des Kugellagers (2) in einem Presssitzloch, wobei das Drehmoment innerhalb des vorbestimmten Bereichs bleibt, wenn es in dem Presssitzloch gehalten wird.

2. Verfahren nach Anspruch 1, das Folgendes umfasst: Erwärmen des Materials, das das Presssitzloch definiert; Abkühlen des Kugellagers (2); Einsetzen des Kugellagers (2) in das Presssitzloch; und Zurückbringen der Temperatur der beiden Teile auf Umgebungstemperatur.

3. Verfahren nach einem der vorhergehenden Ansprüche, wobei der vorbestimmte Drehmomentbereich von 5 bis 100 Nm reicht.

4. Lageranordnung (1), die ein Kugellager (2) umfasst, das ein Lagergehäuse (3) und eine darin befindliche Kugel (4) aufweist, wobei das Lagergehäuse (3) einen starren äußeren Laufring (5) und einen inneren Laufring (6) aufweist, wobei der äußere Laufring (5) des Lagergehäuses (3) fest in einem Presssitzloch gehalten wird und das Kugellager (2) ein Drehmoment zwischen der Kugel (4) und dem Gehäuse (3) aufweist und wobei ein ringförmiger elastomerer Abschnitt (7) zwischen den Laufringen (5, 6) angeordnet ist, **dadurch gekennzeichnet, dass** der innere Laufring (6) starr ist und das Drehmoment innerhalb eines vorbestimmten Bereichs liegt, bevor das Lager (2) in dem Presssitzloch installiert wird, und das Drehmoment innerhalb des vorherbestimmten Bereichs bleibt, wenn das Gehäuse (3) in dem Presssitzloch gehalten wird.

5. Lageranordnung (1) nach Anspruch 4, wobei das Kugellager (2) ein Lager mit einem hohen Drehmoment ist und ein Schwingungsdrehmoment aufweist und der vorbestimmte Bereich 5 bis 100 Nm beträgt.

6. Lageranordnung (1) nach Anspruch 5, wobei das Kugellager (2) ein Lager mit einem hohen Drehmoment ist und ein Schwingungsdrehmoment aufweist und der vorbestimmte Bereich 8 bis 50 Nm beträgt.

7. Lageranordnung (1) nach einem der Ansprüche 4 bis 6, wobei der elastomere Abschnitt (7) an den inneren Laufring (6) und den äußeren Laufring (5) gebunden ist.

8. Lageranordnung (1) nach einem der Ansprüche 4 bis 7, wobei eine Lagerschale (12) auf dem inneren Laufring (6) in Kontakt mit der Kugel (4) vorgesehen ist.

9. Lageranordnung (1) nach Anspruch 8, wobei die Lagerschale (12) eine selbstschmierende Lagerschale ist.

10. Lageranordnung (1) nach einem der Ansprüche 4 bis 9, wobei der innere Laufring (6) und die Kugel (4) beide aus Metall hergestellt sind und der innere Laufring (6) in direktem Kontakt mit der Kugel (4) steht.

## Revendications

1. Un procédé pour fabriquer un agencement de palier (1), comportant : fournir un palier sphérique (2) devant être solidement maintenu dans un trou à ajustement serré, le palier sphérique (2) ayant un logement de palier (3) et une bille (4) située à l'intérieur de celui-ci, le logement de palier (3) ayant un chemin de roulement externe rigide (5) et un chemin de roulement interne rigide (6) et une portion élastomère annulaire (7) prise en sandwich entre les chemins de roulement (5, 6), dans lequel le palier sphérique (2) a un couple entre la bille (4) et le logement (3), le couple étant à l'intérieur d'une plage prédéterminée ; et
installer le palier sphérique (2) dans un trou à ajustement serré, le couple restant à l'intérieur de la plage prédéterminée quand il est maintenu dans le trou à ajustement serré.

2. Un procédé selon la revendication 1, comportant : chauffer le matériau définissant le trou à ajustement serré ; refroidir le palier sphérique (2) ; insérer le palier sphérique (2) dans le trou à ajustement serré ; et permettre à la température des deux pièces de revenir à température ambiante.

3. Un procédé selon n'importe quelle revendication précédente, dans lequel la plage de couple prédéterminée est de 5 à 100 Nm.

4. Un agencement de palier (1) comportant un palier sphérique (2) ayant un logement de palier (3) et une bille (4) située à l'intérieur de celui-ci, le logement de palier (3) ayant un chemin de roulement externe rigide (5) et un chemin de roulement interne (6), dans lequel le chemin de roulement externe (5) du logement de palier (3) est solidement maintenu dans un trou à ajustement serré et le palier sphérique (2) a un couple entre la bille (4) et le logement (3), et dans lequel une portion élastomère annulaire (7) est prise en sandwich entre les chemins de roulement (5, 6), **caractérisé en ce que** le chemin de roulement interne (6) est rigide et le couple est à l'intérieur d'une plage prédéterminée avant que le palier (2) soit installé dans le trou à ajustement serré, et le couple reste à l'intérieur de la plage prédéterminée quand le logement (3) est maintenu dans le trou à ajustement serré.

5. Un agencement de palier (1) selon la revendication 4, dans lequel le palier sphérique (2) est un palier à couple élevé ayant un couple oscillatoire et la plage prédéterminée est de 5 à 100 Nm.

6. Un agencement de palier (1) selon la revendication 5, dans lequel le palier sphérique (2) est un palier à couple élevé ayant un couple oscillatoire et la plage prédéterminée est de 8 à 50 Nm.

7. Un agencement de palier (1) selon n'importe laquelle des revendications 4 à 6, dans lequel la portion élastomère (7) est collée aux chemins de roulement interne (6) et externe (5).

8. Un agencement de palier (1) selon n'importe laquelle des revendications 4 à 7, dans lequel une garniture (12) est fournie sur le chemin de roulement interne (6) en contact avec la bille (4).

9. Un agencement de palier (1) selon la revendication 8, dans lequel la garniture (12) est une garniture autolubrifiante.

10. Un agencement de palier (1) selon n'importe laquelle des revendications 4 à 9, dans lequel le chemin de roulement interne (6) et la bille (4) sont tous les deux fabriqués en métal et le chemin de roulement interne (6) est en contact direct avec la bille (4).
